# EUROPEAN PATENT APPLICATION

(11) **EP 2 679 481 A1**
(43) Date of publication of application: **01.01.2014**
(21) Application number: 12749892.1
(22) Date of filing: 01.02.2012
(51) Int. Cl.: B63B 1/38, B63H 21/14, F01D 17/16, F02B 37/00, F02B 37/24, F02C 6/08

(54) **DEVICE FOR REDUCING RESISTANCE OF SHIP BODY**

(30) Priority: 24.02.2011 JP 2011038326
(71) Applicant: Mitsubishi Heavy Industries, Ltd., Tokyo 108-8215 (JP)
(72) Inventor: SHIRAISHI, Keiichi, Tokyo 108-8215 (JP)
(74) Representative: Henkel, Breuer & Partner
(86) International application number: PCT/JP2012/052295
(87) International publication number: WO 2012/114840

(57) **Abstract**

A ship-body resistance reduction device that reduces friction resistance during running by discharging air bubbles at a ship-body outer surface of a ship includes a turbocharger (20) that is driven by exhaust gas from a main engine of the ship and that pumps combustion air to the main engine, the combustion air supplied to the main engine from the turbocharger (20) being extracted and discharged at the ship-body outer surface, and wherein the turbocharger (20) includes a variable nozzle that is capable of adjusting an exhaust-gas flow rate in two stages, the variable nozzle is closed when the combustion air is extracted and discharged at the ship-body outer surface, and the variable nozzle is opened when the combustion air is extracted but not discharged at the ship-body outer surface.

## Description

### {Technical Field}

### {Background Art}

The present invention relates to a ship-body resistance reduction device that reduces friction resistance during running by discharging micro air bubbles from the ship-body.

In the recent art, a technique that reduces ship-body friction resistance by discharging micro air bubbles at the outer surface of a bottompart of a ship while running, thereby reducing the required propulsion power of the ship, in other words, reducing the fuel consumption, has been put into practice. In order to discharge such air bubbles, a driving source for, for example, an electric compressor etc., is required.
In addition, as disclosed in PTL 1 below for example, ship resistance reduction devices include a device that dissolves carbon dioxide contained in the exhaust gas from a diesel engine installed in the ship in sea water and forms bubbles of carbon dioxide by ejecting the sea water from a jet nozzle. In this case, a driving source is required for driving a compression device that compresses the carbon dioxide separated from the exhaust gas and a pump that sucks in the sea water.

Furthermore, PTL 2 mentioned below relates to a method and a device for reducing the friction of a ship by forming air bubbles by utilizing pressurized gas from a turbocharger or the proximity thereof, and PTL 2 discloses a technique that obtains bypassed air in a most suitable manner in accordance with the operating state or surrounding conditions by employing a variable nozzle as variable means that improves the air-intake properties of the turbocharger and by changing the direction or the angle of a nozzle blade. In this case, a turbine of the turbocharger is a variable turbine whose capacity can be changed continuously.

### {Citation List}

### {Patent Literature}

{PTL 1} Japanese Unexamined Patent Application, Publication No. 2010-208435
{PTL 2} Japanese Unexamined Patent Application, Publication No. 2010-228679

### {Summary of Invention}

### {Technical Problem}

As described above, according to the conventional ship-body resistance reduction device, because the air bubbles are discharged at the outer surface of the bottom part of the ship-body, a driving source for a compressor, a pump, and so forth is required, and therefore, energy for the driving source, such as electrical power etc., is consumed. Accordingly, even if the fuel consumption for the ship propulsion is reduced due to the discharged air bubbles, the energy saving effect is diminished due to the energy consumed by the compressor, pump, and so forth, and therefore, there is a demand for the development of a ship-body resistance reduction device whose energy saving effect is improved further.

In addition, as disclosed in PTL 2, in the case of the conventional technique that utilizes the air-intake of the turbocharger, because the turbine of the turbocharger can continuously change its capacity, there is a problem in that the control thereof is complicated.
The present invention has been conceived to solve the problems described above, and an object thereof is to provide a ship-body resistance reduction device having a high energy saving effect, that does not consume extra power for discharging air bubbles, and that can be controlled in a simple manner.

### {Solution to Problem}

In order to solve the problems described above, the present invention employs the following solutions.
A ship-body resistance reduction device according to the present invention is a ship-body resistance reduction device that reduces friction resistance during running by discharging air bubbles at a ship-body outer surface of a ship, including: a turbocharger that is driven by exhaust gas from a main engine of the ship and that pumps combustion air to the main engine, the combustion air supplied to the main engine from the turbocharger being extracted and discharged at the ship-body outer surface, and wherein the turbocharger comprises a variable nozzle that is capable of adjusting an exhaust-gas flow rate in two stages and is controlled such that the variable nozzle is closed when the combustion air is extracted and discharged at the ship-body outer surface, and the variable nozzle is opened when the combustion air is extracted but not discharged at the ship-body outer surface.

According to such a ship-body resistance reduction device of the present invention, because the device is provided with the turbocharger that is driven by the exhaust gas from the main engine of the ship and that pumps the combustion air to the main engine, and the combustion air supplied to the main engine from the turbocharger is extracted and discharged at the ship-body outer surface, the air bubbles discharged at the ship-body outer surface is the air compressed by the turbocharger; therefore, there is no need to provide a driving source that consumes energy, such as, for example, an electric motor that drives a compression machine.

Furthermore, the turbocharger is provided with the variable nozzle that is capable of adjusting the exhaust-gas flow rate in two stages and is controlled such that the variable nozzle is closed when the combustion air is extracted and discharged at the ship-body outer surface, and the variable nozzle is opened when the combustion air is extracted but not discharged at the ship-body outer surface. Therefore, when air is extracted and sent to the bottom, it is possible to ensure the amount of air required for discharging the air bubbles by increasing the output of the turbocharger turbine by closing the turbine nozzle, and furthermore, when there is no need to send air to the bottom, it is possible to suppress an increase in the scavenged air pressure in the case where the turbine nozzle is opened and extraction is not performed.
Because the main engine for the ship is generally a two-stroke diesel engine, the combustion air mentioned above is scavenged air.

In the above mentioned invention, the turbocharger may be provided with an air-bubbles-off high-load operating mode in which the variable nozzle is opened in an operating state in which the air bubbles are not discharged and in a high-load region between a maximum load and a load at which the combustion air pressure reaches a predetermined allowable limit.
By providing such an air-bubbles-off high-load operating mode, in the case where a ship runs without discharging the air bubbles because of the hydrographic conditions etc., the combustion air pressure is prevented from becoming a pressure exceeding a predetermined value even when the main engine is operated in the high-load region. Therefore, because there is no need to needlessly perform extraction for suppressing an increase in the combustion air pressure in the high-load operating region in which the air bubbles are not discharged, it is possible to improve the efficiency of the main engine by preventing a reduction in the turbocharging efficiency and an increase in the fuel consumption rate.

### {Advantageous Effects of Invention}

According to the present invention described above, because there is no need to provide a driving source, which consumes energy for discharging air bubbles, it is possible to provide a ship-body resistance reduction device having a high energy saving effect that is capable of discharging air bubbles without consuming extra power. In addition, because a turbocharger is provided with a variable nozzle that is capable of adjusting the exhaust-gas flow rate in two stages, it is possible to perform simple control by switching the variable nozzle between two stages.
Furthermore, by employing a variable-nozzle-equipped turbocharger that is adjustable in two stages as the turbocharger and by providing the air-bubbles-off high-load operating mode, because there is no need to needlessly perform extraction for suppressing an increase in the combustion air pressure even in the high-load operating region in which the air bubbles are not discharged, it is possible to improve the efficiency of the main engine and to provide a ship-body resistance reduction device whose energy saving effect is improved further.

### {Brief Description of Drawings}

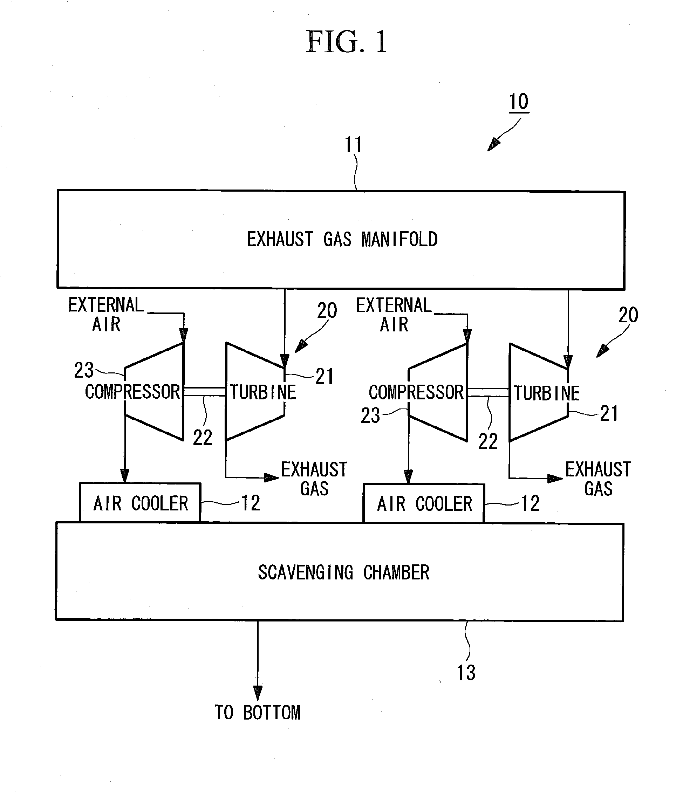

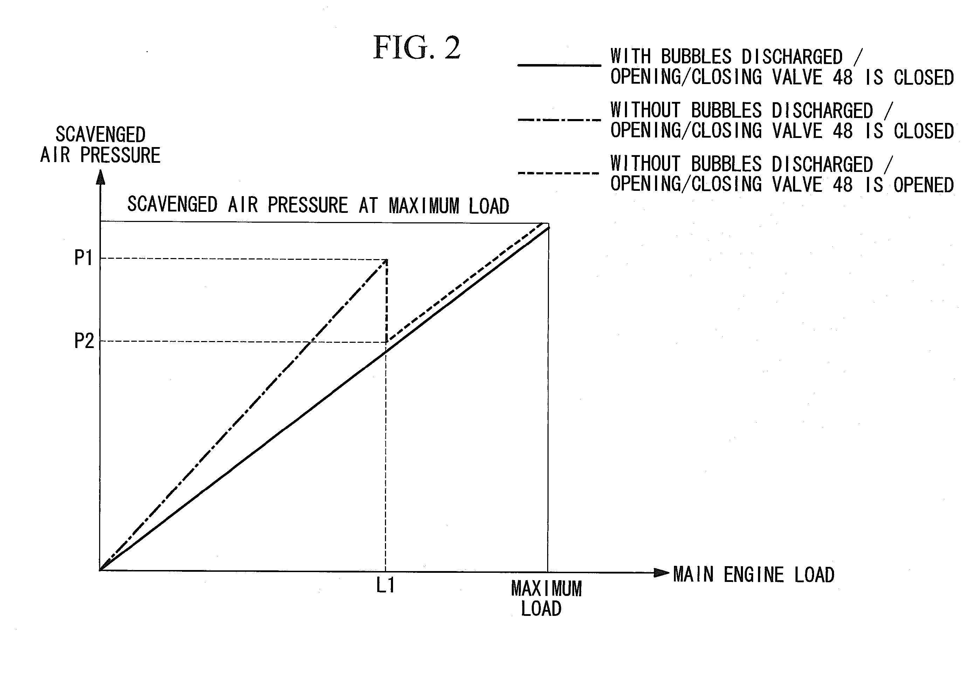

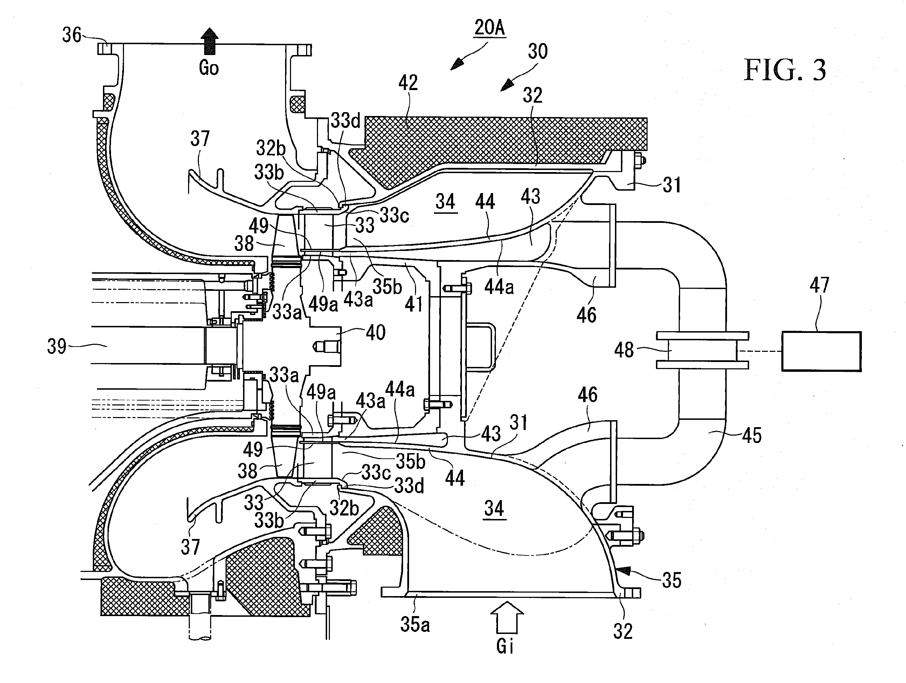

{FIG. 1} FIG. 1 is a system diagram showing, in outline, an example configuration of a part that supplies air for forming air bubbles as an embodiment of a ship-body resistance reduction device according to the present invention.
{FIG. 2} FIG. 2 is a diagram for explaining an air-bubbles-off high-load operating mode that is provided when a variable-nozzle-equipped turbocharger is employed as a turbocharger.
{FIG. 3} FIG. 3 is a partial cross-sectional configuration diagram showing a cross-section of an example inner configuration of the turbine side of a variable-nozzle-equipped turbocharger as an example.

### {Description of Embodiment}

One embodiment of a ship-body resistance reduction device according to the present invention will be described below with reference to the drawings.
A ship-body resistance reduction device is a device that reduces ship-body friction resistance by running a ship while discharging micro air bubbles at the ship-body outer surface of the ship running on water, in particular, at the outer surface of the bottom part of the ship-body below the waterline, which is submerged underwater during running.
FIG. 1 is a system diagram showing, in outline, an example configuration of an air supplying part that supplies air forming micro air bubbles at the bottom. The numerous micro air bubbles are formed on the ship-body outer surface by discharging the air supplied to the bottom at the ship-body outer surface from an air-discharging portion (not shown), such as a nozzle etc.

An air supplying part 10 illustrated in the figure is provided with a turbocharger 20 that compresses external air by receiving the exhaust gas from an exhaust gas manifold 11 provided on a main engine of a ship. The turbocharger 20 is a device in which a turbine 21 is rotated by utilizing the energy of the exhaust gas that is exhausted from an internal combustion engine of the main engine, and the external air is compressed by driving a compressor 23 connected to a rotor shaft 22. In other words, the turbocharger 20 is configured such that, for example, shaft output that is obtained by allowing the exhaust gas introduced into the axial-flow turbine 21 to expand is utilized to rotate the coaxial compressor 22, and such that the compressed air formed by compressing the sucked external air to a high density is supplied to the internal combustion engine as combustion air.

The main engine of the ship is generally a two-stroke diesel engine, and the compressed air supplied to the main engine as the combustion air is called scavenged air because it is provided by scavenging the exhaust gas remaining in combustion cylinders. In other words, the combustion air that is supplied by compressing the external air in the turbocharger 20 is guided to a scavenging chamber 13 as the scavenged air after being cooled in an air cooler 12. In the illustrated example configuration, although two sets of turbochargers 20 and air coolers 12 are shown, it is not limited thereto.

A main flow of the scavenged air collected in the scavenging chamber 13 is supplied to the combustion cylinders of the main engine, and a part of the flow extracted therefrom is supplied to an air-discharging portion in the bottom. Although the scavenged air supplied to the air-discharging portion in this manner is discharged into the water to form the micro air bubbles, because the scavenged air is compressed air that is compressed in the compressor 22 in the turbocharger 20, the scavenged air possesses enough pressure allowing it to be discharged into water by being supplied to the air-discharging portion.

Therefore, there is no need to provide a device such as, for example, an electrical compression machine etc., which requires a driving source for discharging air into the water for forming the air bubbles, and thus, the consumption of electric power for driving an electric motor is also avoided. In other words, because the air bubbles are formed using the compressed air that is obtained by utilizing the energy of the exhaust gas exhausted from the main engine, the air bubbles can be discharged without consuming extra power, and a ship-body resistance reduction device with a high energy saving effect can be provided. That is to say, because there is no need to provide a new driving source that consumes energy for discharging the air bubbles, a ship-body resistance reduction device that does not suffer from a decreased fuel-consumption-reduction effect on the ship propulsion due to the discharged air bubbles is provided.

Because the air supplying part 10 of the above-mentioned embodiment forms the air bubbles by extracting the scavenged air from the scavenging chamber 13, it is possible to consider a situation in which a ship runs without discharging the air bubbles from the bottom depending on, for example, the hydrographic conditions etc. If the air extraction from the scavenging chamber 13 is stopped in such a situation, there is a risk of an excessive increase in the scavenged air pressure in the main engine in a high-load operating region in which the output from the main engine is high. Therefore, in order to protect the main engine and the scavenging chamber 13 from a scavenged air pressure exceeding a predetermined value, a certain level of air extraction from the scavenging chamber 13 is required even if the discharging of air bubbles from the bottom is stopped.
However, if the scavenged air is extracted from the scavenging chamber 13, the turbocharging efficiency of the turbocharger 20 is lowered, thus causing the fuel consumption rate of the main engine to increase.

Thus, in this embodiment, a variable-nozzle-equipped turbocharger 20A that is configured as shown in FIG. 3, for example, is employed as the turbocharger 20 mentioned above. The variable-nozzle-equipped turbocharger 20A is a turbocharger that is capable of adjusting the flow rate of the exhaust gas (exhaust-gas flow rate) supplied from the main engine (internal combustion engine) in two stages by performing open/close control of a variable nozzle.
FIG. 3 is a cross-sectional diagram showing an example inner configuration of a turbine 30 side of the variable-nozzle-equipped turbocharger 20A. The turbine 30 illustrated in the figure is an axial-flow turbine that is configured such that a coaxial compressor (not shown) is rotated by utilizing shaft output that is obtained by allowing the introduced exhaust gas of the main engine to expand, and such that the compressed air (scavenged air) that is compressed to a high density is supplied to the internal combustion engine.

The turbine 30 is provided with a gas-inlet casing 35 that is configured by joining a separate inner casing 31 and outer casing 32 using fastening means, such as nuts and bolts, etc., such that the space formed between the inner casing 31 and the outer casing 32 becomes a main exhaust-gas channel 34 for guiding the exhaust gas to a turbine nozzle 33.

In the gas-inlet casing 35 having such a double structure, the main exhaust-gas channel 34 is formed around the entire periphery in the rotation direction of the turbine 30, and the exhaust gas that has been introduced through a gas inlet 35a of the gas-inlet casing 35, as shown by an arrow Gi in the figure, is guided to a gas outlet 35b by passing through the main exhaust-gas channel 34, and is then exhausted to the outside through an outlet of a gas-outlet casing 36, as shown by an arrow Go in the figure. In addition, the gas outlet 35b is provided so as to open to the turbine nozzle 33 over the entire periphery thereof in the rotation direction for supplying the exhaust gas.
Reference sign 37 in the figure indicates a gas-guiding tube provided downstream of turbine rotor blades 38.

In addition, the turbine 30 is provided with a rotor disk 40 provided at one end of a rotor shaft 39 and many turbine rotor blades 38 that are attached to the peripheral portion of the rotor disk 40 in the circumferential direction. The turbine rotor blades 38 are provided in the vicinity of the downstream side of the turbine nozzle 33 at which an outlet is provided. The high-temperature exhaust gas ejected from the turbine nozzle 33 is expanded as it passes through the turbine rotor blades 33, thereby causing the rotor disk 40 and a rotor shaft 39 to rotate.

In addition, a hollow barrel-shaped member 41 is connected to the inner circumferential portion (the inner circumferential side of a second end portion) of an end portion of the inner casing 31 at the rotor disk 40 side using bolts, and an inner-circumferential member 33a, which is a ring-shaped member (nozzle ring) forming the turbine nozzle 33, is connected to the end surface of the member 41 (the end surface at the rotor disk 40 side) using bolts.
A ring-shaped member that is generally called a nozzle ring and forms the turbine nozzle 33 has a double-ring structure formed by linking ring-shaped members, that is, the inner-circumferential member 33a and an outer-circumferential member 33b, by means of a partition member so as to form a prescribed space therebetween.

On the other hand, the gas inlet side (the gas outlet 35b side) of an end-portion-inner-circumferential surface 33c of the outer-circumferential member 33b, which is the nozzle ring forming the turbine nozzle 33, has a widened diameter so as to have a bell-mouth shape. In addition, the end portion of the outer casing 32 at the rotor disk 40 side is provided with a stepped portion 32b that is formed by bending the inner circumferential surface of the outer casing 32 in the direction of the rotor disk 40. This stepped portion 32b and a stepped portion 33d that is provided at the end portion at the gas inlet side of the nozzle ring 33 are configured such that they are engaged (fitted together) in the axial direction.

Furthermore, the gas-guiding tube 37 is connected to the gas outlet side (the turbine rotor blade 38 side) end portion of the outer-circumferential member 33b of the turbine nozzle 33. The connecting portion between the outer-circumferential member 33b and the gas-guiding tube 37 of the turbine nozzle 33 has a recessed-butt-joint structure in which their end portions are fitted to each other.
Portions hatched with a grid pattern in the figure are heat insulating materials 42 provided for heat insulation and acoustic insulation.

At the inner circumferential side (radially inner side) of the inner casing 31 mentioned above, a secondary exhaust-gas channel 43 that guides the exhaust gas split off from an intermediate portion of the main exhaust-gas channel 34 to the inner circumferential side (radially inner side) of the turbine nozzle 33 is formed around the entire periphery in the rotation direction of the turbine 30. The secondary exhaust-gas channel 43 is provided at the inner circumferential side (radially inner side) of the main exhaust-gas channel 34, and the main exhaust-gas channel 34 and the secondary exhaust-gas channel 43 are partitioned by a partition 44 forming the inner casing 31.

In addition, at the inner circumferential portion at a first end (the inner circumferential side at a first end portion) of the inner casing 31, a flange 46 for connecting an exhaust gas pipe 45 is provided, and an opening/closing valve (for example, a butterfly valve) 48 that is opened and closed automatically by means of a controller 47 is connected to an intermediate portion of the exhaust gas pipe 45. The exhaust gas that has been split off from the intermediate portion of the main exhaust-gas channel 34 is guided to the secondary exhaust-gas channel 43 through a channel (not shown) formed inside the flange 46 and the exhaust gas pipe 45.

Furthermore, at the base side (the inner-circumferential member 33a side) of the turbine nozzle 33, a partition 49 is provided such that its inner peripheral surface (radially-inside surface) 49a forms the same plane with the inner peripheral surface (radially-inside surface) 44a of the partition 44, so as to partition the inner circumferential side and the outer circumferential side of the turbine nozzle 33.
When the position at the base of the turbine nozzle 33 (the position connected to the inner-circumferential member 33a) is set as 0% of the blade length, and the position at the tip of the turbine nozzle 33 (the position connected to the outer-circumferential member 33b) is set as 100% of the blade length, the partition 49 is provided at about the 10% position of the blade length.

With the thus-configured variable-nozzle-equipped turbocharger 20A, when the load of the main engine is low and the amount of exhaust gas is low, the opening/closing valve 48 is fully closed, and when the load of the main engine is high and the amount of exhaust gas is high, the opening/closing valve 48 is fully opened.
In other words, when the load of the main engine is low and the amount of exhaust gas is low, all of the exhaust gas that has been introduced from the gas inlet 35a of the gas-inlet casing 35 is guided to the gas outlet 35b through the exhaust-gas channel 34. The exhaust gas guided to the gas outlet 35b is sucked to the outer circumferential side of the turbine nozzle 33 (into the space partitioned by the outer-circumferential member 33b and the partition 49) from the gas outlet 35b that opens over the entire periphery in the rotation direction and is expanded while passing through the turbine rotor blades 38 to rotate the rotor disk 40 and the rotor shaft 39.

On the other hand, when the load of the main engine is high and the amount of exhaust gas is high, most (about 70 to 95%) of the exhaust gas that has been introduced from the gas inlet 35a of the gas-inlet casing 35 is guided to the gas outlet 35b through the main exhaust-gas channel 34, and a part (about 5 to 30%) of the exhaust gas that has been introduced from the gas inlet 35a of the gas-inlet casing 35 is guided to a gas outlet 43a through the flange 46, the exhaust gas pipe 45, the opening/closing valve 48, and the secondary exhaust-gas channel 43. The exhaust gas guided to the gas outlet 35b is sucked to the outer circumferential side of the turbine nozzle 33 (into the space partitioned by the outer-circumferential member 35b and the partition 49) from the gas outlet 35b that opens over the entire periphery in the rotation direction, and the exhaust gas guided to the gas outlet 43a is sucked to the inner circumferential side of the turbine nozzle 33 (into the space partitioned by the inner-circumferential member 33a and the partition 49) from the gas outlet 43a that opens over the entire periphery in the rotation direction and is expanded while passing through the turbine rotor blades 38 to rotate the rotor disk 40 and the rotor shaft 39.
By rotating the rotor disk 40 and the rotor shaft 39, a compressor (not shown) provided at the other end of the rotor shaft 39 is driven, thereby compressing the scavenged air to be supplied to the main engine.

The air compressed in the compressor is sucked through a filter (not shown), and the exhaust gas expanded at the turbine rotor blades 38 flows out by being guided by the gas-outlet guiding tube 37 and the gas-outlet casing 36.
In addition, when, for example, the pressure of the air sent out (discharged) from the compressor or the pressure of the air supplied to a combustion chamber of the main engine is lower than 0.2 MPa (2 bar) in terms of absolute pressure, in other words, when the internal combustion engine is in a low-load operation, the opening/closing valve 48 is fully closed, and when the pressure of the air sent out (discharged) from the compressor or the pressure of the air supplied to a combustion chamber of the internal combustion engine is equal to or higher than 0.2 MPa (2 bar) in terms of absolute pressure, in other words, when the internal combustion engine is in a high-load operation, the opening/closing valve 48 is fully opened.

With the thus-configured variable-nozzle-equipped turbocharger 20A, by performing an opening/closing operation of the opening/closing valve 48, it is possible to selectively switch between a situation in which the exhaust gas flows from the main exhaust-gas channel 34 to the turbine nozzle 33 through the gas outlet 35b (the flow-path cross-sectional area is small) and a situation in which the exhaust gas flows from the main exhaust-gas channel 34 and the secondary exhaust-gas channel 43 to the turbine nozzle 33 through the gas outlet 35b and the gas outlet 43a (the flow-path cross-sectional area is large).
In other words, the turbine nozzle 33 is a variable nozzle that is capable of adjusting the exhaust-gas flow rate by changing the flow-path cross-sectional area of the exhaust-gas channel by performing the opening/closing operation of the opening/closing valve 48. In other words, the variable-nozzle-equipped turbocharger 20A is a turbocharger that is capable of adjusting the exhaust-gas flow rate in two stages by performing open/close control of the variable nozzle (open/close control of the opening/closing valve 48).

Therefore, in this embodiment, as shown in FIG. 2, the turbocharger 20 is the variable-nozzle-equipped turbocharger 20A that is capable of adjusting the exhaust-gas flow rate in two stages, and the turbocharger 20 is provided with an air-bubbles-off high-load operating mode in which the turbine nozzle 33, which is the variable nozzle of the variable-nozzle-equipped turbocharger 20A, is opened in the operating state in which the air bubbles are not discharged and in a high-load region between the maximum load and a load L1 at which the pressure of the scavenged air (combustion air) reaches a predetermined allowable limit P1.
In this air-bubbles-off high-load operating mode, in the operating state in which the air bubbles are not discharged, the flow-path cross-sectional area of the exhaust gas is increased by changing the flow-path cross-sectional area of the exhaust-gas channel by performing open/close control of the variable nozzle that performs the opening/closing operation of the opening/closing valve 48, specifically, by opening the opening/closing valve 48 in the high-load region between the maximum load and the load L1 at which the scavenged air pressure reaches the predetermined allowable limit P1.

Such an increase in the flow-path cross-sectional area causes the flow rate of the exhaust gas under the same load (output) condition of the main engine to decrease. As a result, the rotational speed (output) of the turbine 30 driven by the exhaust gas is also lowered, and therefore, the pressure of the scavenged air supplied from the compressor driven by the turbine 30 is also lowered to P2. In other words, in a low-load region between no load and the load L1, the scavenged air pressure in the operating state without discharging air bubbles is increased in proportion to the main engine load in the region between the scavenged air pressure 0 and the allowable limit P1 in the state where the opening/closing valve 48 is closed and the flow-path cross-sectional area is small.

However, when the scavenged air pressure reaches the allowable pressure P1, by realizing a large flow-path cross-sectional area by opening the opening/closing valve 48, the scavenged air pressure is lowered to P2. Therefore, in the high-load region exceeding the load L1, the scavenged air pressure is increased in proportion to the main engine load so as to reach the scavenged air pressure at the maximum load from the scavenged air pressure P2 under the maximum load.
In the case where the air bubbles are discharged, the operation is performed by closing the opening/closing valve 48 so as to make the flow-path cross-sectional area for the exhaust gas small: as a result, the scavenged air pressure is increased to the scavenged air pressure at the maximum load in proportion to the main engine load.

By providing such an air-bubbles-off high-load operating mode, in the case where a ship runs without discharging the air bubbles because of the hydrographic conditions etc., the scavenged air pressure is prevented from becoming a pressure exceeding a predetermined level even if the main engine is operated in the high-load region. Therefore, because there is no need to needlessly perform extraction for suppressing an increase in the scavenged air pressure in the high-load operating region in which the air bubbles are not discharged, it is possible to improve the efficiency of the main engine by preventing a reduction in the turbocharging efficiency and an increase in the fuel consumption rate.

As described above, by employing the variable-nozzle-equipped turbocharger 20A that is capable of adjusting the exhaust-gas flow rate in two stages, because there is no need to provide a driving source that consumes energy for discharging the air bubbles, it is possible to discharge the air bubbles without consuming extra power, and furthermore, by providing the air-bubbles-off high-load operating mode, because there is no need to needlessly perform extraction for suppressing an increase in the scavenged air pressure even in the high-load operating region in which the air bubbles are not discharged, it is possible to improve the efficiency of the main engine, and as a result, it is possible to obtain a ship-body resistance reduction device that is capable of further improving the energy saving effect by means of a simple control.

In addition, the configuration of the variable-nozzle-equipped turbocharger 20A, including the configuration of the variable nozzle, is not limited to that shown in FIG. 3 so long as the exhaust-gas flow rate can be adjusted in two stages.
In addition, the present invention is not limited to the embodiments described above; appropriate alterations are possible within a range that does not depart from the scope thereof. For example, the main engine is not limited to a two-stroke diesel engine.

### {Reference Signs List}

- 10: air supplying part
- 11: exhaust gas manifold
- 13: scavenging chamber
- 20: turbocharger
- 20A: variable-nozzle-equipped turbocharger
- 21, 30: turbine
- 22, 39: rotor shaft
- 23: compressor
- 33: turbine nozzle
- 34: main exhaust-gas channel
- 35b, 43a: gas outlet
- 38: turbine rotor blades
- 40: rotor disk
- 43: secondary exhaust-gas channel
- 45: exhaust gas pipe
- 48: opening/closing valve

## Claims

1. A ship-body resistance reduction device that reduces friction resistance during running by discharging air bubbles at a ship-body outer surface of a ship, comprising:
a turbocharger that is driven by exhaust gas from a main engine of the ship and that pumps combustion air to the main engine, the combustion air supplied to the main engine from the turbocharger being extracted and discharged at the ship-body outer surface,
wherein the turbocharger comprises a variable nozzle that is capable of adjusting an exhaust-gas flow rate in two stages, the variable nozzle being closed when the combustion air is extracted and discharged at the ship-body outer surface, and the variable nozzle being opened when the combustion air is extracted but not discharged at the ship-body outer surface.

2. A ship-body resistance reduction device according to Claim 1, wherein the turbocharger is provided with an air-bubbles-off high-load operating mode in which the variable nozzle is opened in an operating state in which the air bubbles are not discharged and in a high-load region between a maximum load and a load at which the combustion air pressure reaches a predetermined allowable limit.
